# EUROPEAN PATENT SPECIFICATION

(11) **EP 0 555 808 B1**
(45) Date of publication and mention of the grant of the patent: **15.05.1996**
(21) Application number: 93101974.9
(22) Date of filing: 09.02.1993
(51) Int. Cl.: B60B 9/00

(54) **Wheel and method of forming a wheel**
Rad und Herstellungsverfahren
Roue et méthode de fabrication

(30) Priority: 14.02.1992 GB 9203221; 30.04.1992 GB 9209301
(43) Date of publication of application: 18.08.1993
(73) Proprietor: BRITISH CASTORS LIMITED, West Bromwich, West Midlands B70 OUA (GB)
(72) Inventor: Spencer, Richard John, Streetly Sutton Coldfield B74 3LW (GB)
(74) Representative: Harrison, Gordon Donald

(56) References cited:
- DE-B- 1 086 265
- FR-A- 2 200 121
- FR-A- 2 281 256

## Description

### Description of Invention

The present invention relates to a wheel comprising a rim portion, a hub portion and an intermediate portion uniting the rim portion with the hub portion.

In some examples of known wheels, the rim portion, intermediate portion and hub portion are all substantially rigid. In other known wheels, the rim portion and the intermediate portion are resiliently flexible, to impart shock and sound-absorbing characteristics to the wheel. In GB 1 024 109, there is disclosed a wheel having an intermediate portion which defines holes extending through the wheel. The rim portion and the intermediate portion are able to flex together. In GB 1 292 928, there is disclosed a wheel according to the preamble of claim 1 including an intermediate portion which comprises spokes extending from a rim portion to a hub portion. These spokes are curved and can flex to accommodate movement of the hub portion relative to the rim portion whilst the rim portion remains circular. This specification also discloses the provision of rubber blocks between adjacent spokes to control flexing of the spokes.

DE-A-1086265 shows a wheel in which a metallic rim and a metallic hub are bonded together by an in-situ formed intermediate portion made of a plastics material which forms an essentially mechanical bond with the rim and hub. FR-A-2200121 also discloses a similar construction in which a metallic rim and hub are secured together through the intermediary of a moulding of elastomeric material.

However, the mechanical bonding between the metallic and non-metallic parts provides a weakness which can lead to failure of such wheels.

According to a first aspect of the present invention, there is provided a wheel comprising integrally moulded rim, hub and intermediate portions formed from plastics materials, wherein the hub portion and rim portion have substantially the same composition as each other, characterised in that the composition of the intermediate portion differs from that of the rim and hub portions and has a higher degree of resilient deformability than does the composition of the rim portion, and in that the composition of which the hub and rim portions are made merges with the composition of which the intermediate portion is made in interface region between said portions.

We have found that a wheel embodying the first aspect of the invention is less likely to fail in service than is a wheel comprising resilient spokes connecting a hub portion with a rim portion or with an intermediate portion mechanically bonded to the hub and rim portions.

Preferably, the intermediate portion has a form which imparts stiffness to the wheel. The intermediate portion may comprise a composition which is softer than the composition of which the rim portion is formed. The softer composition will transmit shocks and sound energy with a lower efficiency than shocks and sound energy are transmitted by the rim portion. However, the form of the intermediate portion is such as to impede movement of the hub portion relative to the rim portion and to impede such movement to a greater degree than is achieved by the intermediate portions disclosed in the aforesaid published specifications.

There are in the intermediate portion preferably no holes extending through the intermediate portion in a direction parallel to the axis of rotation of the wheel.

In the preferred wheel, there are no voids in the intermediate portion and the intermediate portion has in local regions analogous to spokes a composition which is substantially the same as the composition of the rim portion, the composition of the intermediate portion between said local regions being different.

The rim portion and the intermediate portion of a wheel embodying the invention preferably both comprise primarily polymers of unsaturated hydrocarbons. It will be understood that the compositions of which the rim portion and the intermediate portion or one of them is formed may include extenders, fillers and other materials for modifying the properties of the basic polymer and that a variety of polymers may be incorporated in the composition. These compositions preferably comprise primarily polyolefins. For example, the rim portion may comprise primarily or be formed entirely of polypropylene. The intermediate portion may comprise a polyolefin composition generally designated "thermo-plastic rubber".

According to a second aspect of the invention, there is provided a method of forming such a wheel wherein a first moulding composition is charged into a mould cavity to form a moulding which, when separated from the means defining the mould cavity, is hollow and defines the rim portion and the hub portion of the wheel, and wherein a second, different moulding composition is charged into the hollow moulding to form said intermediate portion whilst merging with the hub and rim portions.

The moulding compositions are preferably selected so that, in the finished wheel, the material formed by the first composition is harder than the material formed by the second composition. The first composition may be primarily or entirely polypropylene and the second composition may be a thermoplastic rubber.

The intermediate portion of the preferred wheel may include a plurality of moulding compositions. For example, there may be formed from a first composition the hub portion, the rim portion and elements extending from the hub portion to the rim portion. A second moulding composition may be combined with the first moulding composition to occupy the spaces between the elements of the intermediate portion. The second composition may be a softer composition than is the first composition. Alternatively, the intermediate portion may be substantially homogenous.

In a case where the intermediate portion comprises a plurality of elements integral with the hub portion and the rim portion, each element may be substantially rectilinear or define a single curve and extend from a respective position on the hub portion radially outwards and circumferentially to a respective position on the rim portion. Alternatively, each element may include at least one bend or corner when the direction of the element changes more abruptly and the element may extend from a respective position on the hub portion radially outwards and in a first circumferential direction to a bend or corner and from the bend or corner radially outwards and in an opposite circumferential direction to a respective position on the rim portion. Each element may comprise more than one bend or corner. For example, each element may have the form of a "Z".

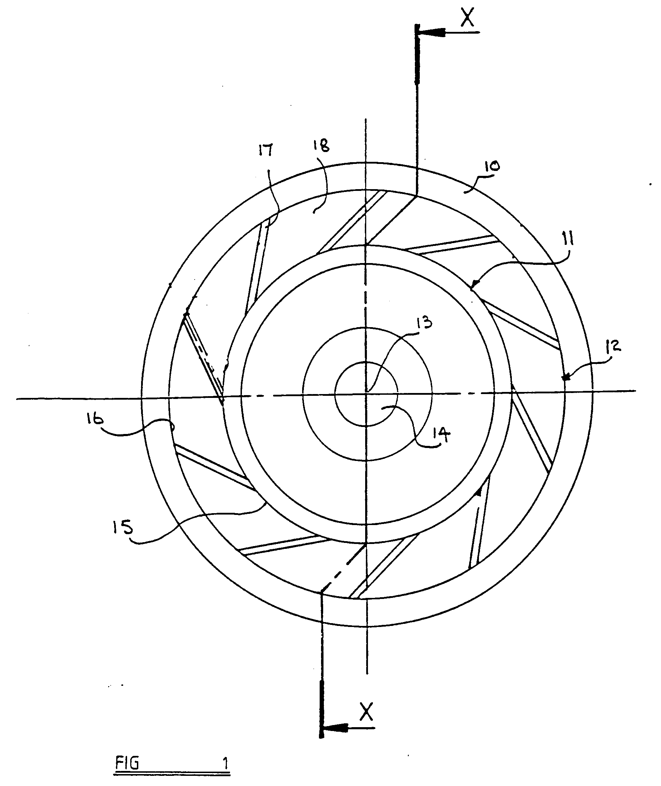

An example of a wheel embodying the first aspect of the invention and which is formed by a method according to the second aspect of the invention will now be described, with reference to the accompanying drawings, wherein
**FIGURE 1** shows an elevation of the wheel, viewed along its axis, and

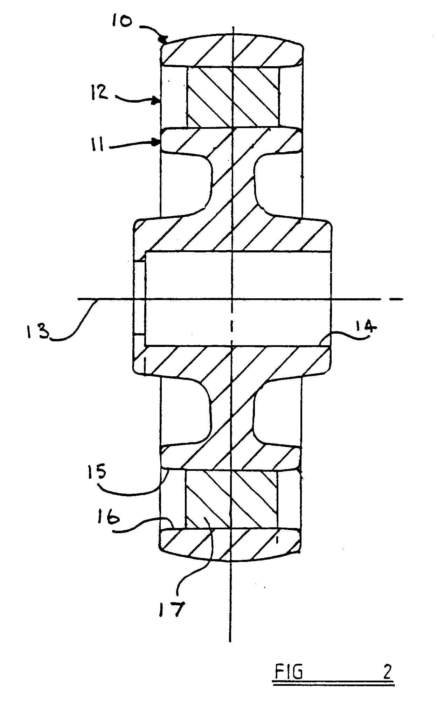

**FIGURE 2** a cross section on the line X-X of Figure 1.

The wheel illustrated in the accompanying drawings comprises a rim portion 10, a hub portion 11 and an intermediate portion 12 uniting the hub portion and the rim portion. The hub portion includes means for mounting the wheel for rotation about an axis 13. In the particular example illustrated, the hub portion defines a bore for receiving an axle having a longitudinal centreline coincident with the axis 13. Alternatively, the hub portion may incorporate a spigot for use in mounting the wheel rotatably on a further member (not shown).

The particular form of hub portion 11 shown in the drawing is of annular form, having a substantially cylindrical, outer peripheral boundary where the hub portion meets the intermediate portion 12 at a substantially cylindrical interface 15. The intermediate portion 12 also is of annular form and has a substantially cylindrical outer periphery at which it meets the rim portion 10, this periphery being defined by a further substantially cylindrical interface 16. In the unstressed (unloaded) condition of the wheel, the radial dimension of the intermediate portion 12 is uniform around the entire circumference of the hub portion and the interface at 15 is substantially concentric with the interface 16.

In the example illustrated, there is no significant radial overlap of the intermediate portion with either the rim portion 10 or with the hub portion 11. However, the illustrated wheel may be modified within the scope of the invention to provide some degree of radial overlap of the intermediate portion with one or with both of the rim portion and the hub portion. The rim portion 10 also is of uniform radial dimension around the entire periphery of the intermediate portion, the outer peripheral surface of the rim portion being concentric with the interface 16. The outer peripheral surface of the rim portion 10 may be substantially cylindrical, part-spherical or otherwise curved in two directions. Preferably, the overall diameter of the wheel at opposite end faces of the wheel is somewhat less than the overall diameter in a plane mid-way between these end faces. With this arrangement, when the wheel is standing on a flat, hard floor, the area of contact between the rim portion and the floor will be small.

The thickness, that is the radial dimension, of the rim portion 10 is considerably less than one half of the radius of the wheel. The thickness, that is the radial dimension, of the intermediate portion 12 also is preferably less than one half of the radius of the wheel. The thickness of the intermediate portion is preferably greater than the thickness of the rim portion. The radius of the hub portion 11, that is the distance from the axis 13 to the outer periphery of the hub portion, is preferably greater than the thickness of the intermediate portion and may be within the range one quarter to three quarters of the radius of the wheel.

The proportion of the overall radius of the wheel which is represented by the intermediate portion is preferably within the range 10% to 60% and more preferably within the range 10% to 30%. The thickness of the intermediate portion may be at least 15% of the radius of the wheel.

The width of the rim portion 10 illustrated in the accompanying drawings, that is the dimension measured along the axis 13, is considerably greater than is the thickness of the rim portion. The width of the rim portion is, however, considerably smaller than the radius of the wheel.

The rim portion 10 is formed of a single composition. This portion may be substantially homogenous. Alternatively, the composition may be a composite one, for example comprising reinforcement and/or a filler in a matrix of a plastics material. The intermediate portion 12 comprises more than a single composition and is not homogenous. In the example illustrated, the intermediate portion includes a number of regions 18 which are spaced apart from each other around the axis 13 and in which the composition of the intermediate portion is significantly different from the composition of the rim portion 10. Between the regions 18, there are local regions 17 where the composition of the intermediate portion approximates to that of the rim portion 10. The composition in the regions 18 is inherently more easily deformed resiliently than is the composition of the rim portion 10. The composition in the regions 18 is preferably elastomeric. The rim portion is formed of a composition which is stiff relative to the elastomeric material of the regions 18.

The rim portion 10, local regions 17 of the intermediate portion and the hub portion 11 are formed integrally with one another by moulding a moulding composition in a cavity defined between moulding tools (not shown). This moulding composition may be polypropylene. The form of the moulding tools is such that the moulding, when separated from the tools, defines spaces between the regions 17. These spaces are holes extending through the wheel in the axial direction. An elastomeric composition is then charged into the spaces between the regions 17, preferably to fill these spaces completely under pressure. The elastomeric composition is then cured. The elastomeric composition is selected to be miscible with the moulding composition used to form the rim portion 10. During moulding of the elastomeric composition, that composition and the composition from which the rim portion 10, hub portion 11 and regions 17 are formed migrate into each other so that, after curing of the elastomeric composition, there are no precise boundaries between these compositions. The compositions become integral.

During moulding of the elastomeric composition, the rim portion 10 and hub portion 11 are held in the required relative positions partly by a moulding tool or moulding tools supporting the rim portion and the hub portion and partly by the first moulding composition in the regions 17.

In the completed wheel, the hub portion 11 may be homogenous or may comprise a reinforcement and/or a filler in a matrix of a plastics material. The composition of the hub portion is preferably the same as that of the rim portion 10.

The elastomeric moulding composition preferably comprises from 70% to 95% of the volume of the intermediate portion 12.

When the wheel is in use, it will be subjected to a downwardly directed load applied to the hub portion 11 by means of an axle in the bore 14. This load will be transferred to a floor at the lowest part of the rim portion 10. The reaction to the force exerted on the floor will tend to move the rim portion 10 upwards relative to the hub portion 11.

The intermediate portion 11 is resiliently deformable relative to the rim portion 10. Accordingly, when the wheel is under moderate load, the rim portion will not be deformed significantly. However, the intermediate portion will be deformed by the load, the shape of the intermediate portion changing somewhat. For example, the lowest part of the intermediate portion may be extended slightly along the axis of the wheel and compressed in the radial direction, whilst an upper part of the intermediate portion is extended slightly in the radial direction. Whilst the intermediate portion is resiliently deformable, relative to the rim portion, it will not generally be particularly soft and the changes in shape and in dimensions of the intermediate portion which take place when the wheel is subjected to typical static loads which will arise in use of the wheel will be small. For example, the hub portion 11 may approach the lower part of the rim portion 10 by 1mm. The intermediate portion can deform to a greater extent when the wheel is subjected briefly to a shock load. The intermediate portion is able to absorb shocks and to reduce the transmission of sound from the rim portion to the hub portion and its axle.

The wheel reduces the risk of damage being caused to equipment to which the wheel is fitted in the event of that equipment being dropped, thrown or otherwise permitted to suffer impact with a floor. Pallets are often fitted with rollers, wheels or castors and are subjected to rough handling involving impact of the rollers or wheels with a floor or other surface. We have found that wheels embodying the present invention reduce the risk of such treatment causing damage to the pallets. By reducing the shock to which a pallet is subjected, the service life of the pallet is prolonged.

The proportions of the wheel may be varied from those shown in the accompanying drawings and the invention may be applied to a wheel wherein the width of the rim surface is approximately equal to or is greater than the diameter of the wheel. Wheels of this form are often referred to as rollers.

The wheel illustrated in the accompanying drawings may be further modified by the provision of additional elements in the intermediate portion 12. For example, there may be provided on the rim portion 10 additional retaining elements which are embedded in the regions 18. Alternatively, such additional retaining elements may be provided on the hub portion 11.

The regions 17 may be omitted. In this case, it would either be necessary to provide additional elements for maintaining the required positional relation between the rim portion and the hub portion until the formation of the wheel has been completed or it would be necessary to arrange the moulding tools for holding the hub portion and the rim portion in the required relative positions during moulding of the bodies 18.

There are no holes additional to the bore which extends along the axis 13 formed in the hub portion 11. There is no hole extending through the intermediate portion and there are no voids in the intermediate portion. There are no holes extending through the rim portion 10.

It will be noted that the intermediate portion 12 merges with the rim portion 10 in a region which extends without interruption completely around the axis 13 of rotation of the wheel. Similarly, the intermediate portion merges with the hub portion 11 in a region which extends without interruption completely around the axis of rotation of the wheel.

The wheel may have a diameter within the range 50mm to 200mm.

## Claims

1. A wheel comprising integrally moulded rim, hub and intermediate portions (10,11,12) formed from plastics materials, wherein the hub portion (11) and rim portion (10) have substantially the same composition as each other, characterised in that the composition of the intermediate portion differs from that of the rim and hub portions and has a higher degree of resilient deformability than does the composition of the rim portion, and in that the composition of which the hub and rim portions are made merges with the composition of which the intermediate portion is made in interface region between said portions.

2. A wheel according to Claim 1 wherein the rim portion (10) and the hub portion (11) are each homogenous in composition.

3. A wheel according to Claim 2 wherein the intermediate portion (12) is not homogenous in composition.

4. A wheel according to Claim 3 wherein the intermediate portion (12) has in local regions (17) analogous to spokes a composition substantially the same as that of the hub portion and the rim portion, and wherein the composition of the intermediate portion (12) between said local regions (17) is different from that of said local regions (17).

5. A wheel according to any one of the preceding claims wherein there are in the intermediat portion (12) no holes extending through the intermediate portion in a direction parallel to the axis of rotation of the wheel.

6. A wheel according to any one of the preceding claims wherein there are no voids in the intermediate portion (12).

7. A wheel according to Claim 1 or Claim 2 wherein the intermediate regions in which the composition of which the hub and rim portions are made merges with the composition of which the intermediate portion is made extend without interruption completely around the axis (13) of rotation of the wheel.

8. A method of forming a wheel according to any one of the preceding claims wherein a first moulding composition is charged into a mould cavity to form a moulding which, when separated from the means defining the mould cavity, is hollow and defines the rim portion (10) and the hub portion (11) of the wheel, and wherein a second, different moulding composition is charged into the hollow moulding to form said intermediate portion (12) whilst merging with the hub and rim portions.

## Patentansprüche

1. Rad, umfassend einteilig geformte Außen-, Naben- und Zwischenabschnitte (10, 11, 12), die aus Kunststoffmaterial hergestellt sind, wobei der Nabenabschnitt (11) und der Außenabschnitt (10) im Wesentlichen die gleiche Zusammensetzung aufweisen, dadurch gekennzeichnet, daß sich die Zusammensetzung des Zwischenabschnitts von der der Außen- und Nabenabschnitte unterscheidet und einen höheren Grad an elastischer Verformbarkeit als die Zusammensetzung des Außenabschnitts aufweist, sowie dadurch, daß die Zusammensetzung, aus der die Naben- und Außenabschnitte bestehen, mit der Zusammensetzung, aus der der Zwischenabschnitt besteht, im Grenzflächenbereich zwischen den Abschnitten verschmilzt.

2. Rad nach Anspruch 1, dadurch gekennzeichnet, daß der Außenabschnitt (10) und der Nabenabschnitt (11) jeweils eine homogene Zusammensetzung aufweisen.

3. Rad nach Anspruch 2, dadurch gekennzeichnet, daß die Zusammensetzung des Zwischenabschnitts (12) nicht homogen ist.

4. Rad nach Anspruch 3, dadurch gekennzeichnet, daß der Zwischenabschnitt (12) in lokalen Zonen (17) analog zu Speichen eine Zusammensetzung hat, die im wesentlichen die gleiche wie die Zusammensetzung des Naben- und des Außenabschnitts ist, wobei die Zusammensetzung des Zwischenabschnitts (12) zwischen den lokalen Zonen (17) von der der lokalen Zonen (17) abweicht.

5. Rad nach einem der vorangehenden Ansprüche, dadurch gekennzeichnet, daß sich im Zwischenabschnitt (12) keine Öffnungen befinden, die sich in einer zur Drehachse des Rades parallelen Richtung durch den Zwischenabschnitt hindurch erstrecken.

6. Rad nach einem der vorangehenden Ansprüche, dadurch gekennzeichnet, daß sich im Zwischenabschnitt (12) keine unausgefüllten Stellen befinden.

7. Rad nach Anspruch 1 oder 2, dadurch gekennzeichnet, daß sich die Zwischenbereiche, in denen die Zusammensetzung, aus der die Naben- und Außenabschnitte bestehen, mit der Zusammensetzung, aus der der Zwischenabschnitt besteht, verschmilzt, ohne Unterbrechung vollständig um die Drehachse (13) des Rades herum erstrecken.

8. Verfahren zum Ausbilden eines Rades nach einem der vorangehenden Ansprüche, dadurch gekennzeichnet, daß eine erste Formmassen-Zusammensetzung in einen Formhohlraum gegeben wird, um ein Formteil auszubilden, das, wenn es von den den Formhohlraum bildenden Mitteln getrennt wird, hohl ist und den Außenabschnitt (10) und den Nabenabschnitt (11) des Rades bildet, wobei eine zweite, unterschiedliche Formmassen-Zusammensetzung in das hohle Formteil gegeben wird, um den Zwischenabschnitt (12) zu auszubilden, wobei diese mit dem Naben- und dem Außenabschnitt verschmilzt.

## Revendications

1. Roue comprenant des parties intégralement moulées de jante, de moyeu et intermédiaire (10, 11, 12) constituées de matière plastique, dans laquelle la partie de moyeu (11) et la partie de jante (10) ont essentiellement la même composition, caractérisée en ce que la composition de la partie intermédiaire diffère de celle des parties de jante et de moyeu et possède un degré plus élevé d'élasticité que la composition de la partie de jante, et en ce que la composition des parties de moyeu et de jante s'amalgame avec la composition de la partie intermédiaire dans une zone de contact entre lesdites parties.

2. Roue selon la revendication 1, dans laquelle la partie de jante (10) et la partie de moyeu (11) sont de composition homogène.

3. Roue selon la revendication 2, dans laquelle la partie intermédiaire (12) n'est pas de composition homogène.

4. Roue selon la revendication 3, dans laquelle la partie intermédiaire (12) a, dans des zones locales (17) semblables à des rayons, une composition essentiellement identique à celle de la partie de moyeu et de la partie de jante, et dans laquelle la composition de la partie intermédiaire (12) entre lesdites zones locales (17) est différente de celle desdites zones locales (17).

5. Roue selon l'une quelconque des revendications précédentes, dans laquelle il n'y a, dans la partie intermédiaire (12), aucun trou s'étendant à travers la partie intermédiaire dans une direction parallèle à l'axe de rotation de la roue.

6. Roue selon l'une quelconque des revendications précédentes, dans laquelle il n'y a pas de vide dans la partie intermédiaire (12).

7. Roue selon la revendication 1 ou 2, dans laquelle les zones intermédiaires au niveau desquelles la composition des parties de moyeu et de jante s'amalgame avec la composition de la partie intermédiaire s'étendent sans interruption entièrement autour de l'axe (13) de rotation de la roue.

8. Procédé de fabrication d'une roue selon l'une quelconque des revendications précédentes, dans lequel un premier mélange à mouler est placé dans un creux du moule pour constituer un moulage qui, lorsqu'il est séparé du moyen définissant le creux du moule, est creux et définit la partie de jante (10) et la partie de moyeu (11) de la roue, et dans lequel un deuxième mélange à mouler, différent, est placé dans le moulage creux pour constituer ladite partie intermédiaire (12) tout en s'amalgamant avec les parties de moyeu et de jante.
